# DEMANDE DE BREVET EUROPEEN

(11) **EP 4 819 127 A1**
(43) Date de publication de la demande: **07.10.2026**
(21) Numéro de dépôt: 26169420.2
(22) Date de dépôt: 31.03.2026
(51) Int. Cl.: G10L 15/22, G10L 17/22

(54) **MÉTHODE ET SYSTÈME D OPTIMISATION D'UN ASSISTANT CONVERSATIONNEL DANS UN ENVIRONNEMENT MULTILOCUTEURS D'UNE CABINE DE VÉHICULE**

(30) Priorité: 31.03.2025 FR 2503289
(71) Demandeur: AMPERE s.a.s., 92100 Boulougne-Billancourt (FR)
(72) Inventeur: ROSSELLO, Norbert, 06410 BIOT (FR)
(74) Mandataire: Renault Group

(57) **Abrégé**

La présente invention concerne une méthode (100) d'optimisation d'un assistant conversationnel dans un environnement multi locuteurs d'une cabine de véhicule, la méthode comprenant les étapes suivantes : une étape de capture (110) de données de conversation (DC), incluant la capture simultanée d'images et de sons relatifs à différents locuteurs (L1-L6) présents dans la cabine ; une étape d'analyse (120) en temps réel des données de conversation (DC) capturées, incluant une sous-étape (121) d'identification du locuteur actuel (LA) et une sous-étape (122) d'identification d'un état de conversation (EC) actuel ; et une étape d'intervention (130) de l'assistant conversationnel, incluant l'émission d'un message vocal (MV) sur un sujet déterminé à un instant déterminé, en tenant compte des données de conversation (DC), des locuteurs (L1-L6) et des états de conversation (EC) identifiés.

## Description

### Domaine technique

La présente invention concerne une méthode et un système d'optimisation d'un assistant conversationnel dans un environnement multi locuteurs d'une cabine de véhicule. L'invention concerne également un véhicule équipé d'un tel système.

Le domaine de l'invention est celui des assistants conversationnels équipant les véhicules, également appelés agents conversationnels. L'invention s'applique en particulier aux véhicules automobiles, conçus pour accueillir un conducteur et un ou plusieurs passagers, incluant les véhicules utilitaires et les camions. L'invention peut également s'appliquer aux autres types de véhicules, tels que les bateaux, trains, avions.

### Art antérieur

Les systèmes de reconnaissance vocale embarqués dans les véhicules apportent de nombreux avantages pratiques et de sécurité aux conducteurs. Ils permettent de contrôler diverses fonctionnalités d'un véhicule, telles que la navigation, la radio, la climatisation, de passer des appels téléphoniques ou envoyer des messages SMS, sans quitter la route des yeux. Cela peut aider à réduire les distractions et à améliorer la sécurité routière. En outre, la technologie de reconnaissance vocale permet de comprendre les instructions et les demandes du conducteur, puis lui fournir des réponses et commentaires clairs et précis.

En pratique, la cabine d'un véhicule n'est pas un espace isolé pour le seul conducteur. En effet, il peut y avoir plusieurs personnes présentes dans la cabine, engagées dans une conversation. Pour la plupart, les systèmes d'assistant vocal existants ne prennent pas en compte l'état conversationnel dans la cabine pour optimiser les interactions. Lorsque plusieurs personnes sont présentes dans le véhicule, il est probable qu'une conversation soit déjà en cours entre les passagers. Dans ce cas, les interventions de l'assistant vocal peuvent devenir intrusives ou perturbatrices. Par exemple, si l'assistant vocal interrompt une discussion entre les passagers pour émettre une suggestion, cela peut créer une confusion ou au plus une rupture dans la conversation en cours. Cette intrusion peut être perçue comme gênante ou désagréable par les occupants du véhicule, car elle perturbe la conversation en cours. De plus, les propositions ou les réponses de l'assistant vocal pourraient être mal comprises ou ignorées, réduisant ainsi leur efficacité et leur utilité. Ainsi, il est important de repenser le fonctionnement de l'assistant vocal, en prenant en compte l'état conversationnel présent dans la cabine avant d'interagir avec le conducteur.

US12028178 décrit l'intégration d'un assistant virtuel à un système de conférence, en utilisant des transducteurs, des algorithmes d'intelligence artificielle et des connexions audio. Les transducteurs du système de conférence sont utilisés pour capturer le son de l'assistant virtuel et le reproduire, tout en fournissant un retour visuel sur l'état de l'assistant virtuel, grâce à des dispositifs indicateurs visuels et/ou des dispositifs du système de conférence. Des algorithmes d'intelligence artificielle sont utilisés pour traiter les signaux associés aux commandes vocales de l'assistant virtuel, aux caractéristiques de l'environnement et/ou aux caractéristiques de la session de conférence. Cela permet de déterminer les paramètres des dispositifs à contrôler, en fonction de ces signaux et caractéristiques. Ainsi, le système de conférence peut être configuré pour répondre aux besoins spécifiques de la session de conférence et offrir une expérience améliorée aux utilisateurs.

US11977849 décrit un système d'assistant conversationnel utilisant l'intelligence artificielle. Le système analyse le contenu d'au moins un flux de conversation capturé entre plusieurs utilisateurs en temps réel, à l'aide d'un modèle d'analyse de contenu. En se basant sur cette analyse, les besoins d'assistance d'un ou plusieurs utilisateurs, ainsi que le contexte primaire lié aux flux de conversation, peuvent être identifiés. Un modèle d'IA est ensuite utilisé pour sélectionner un ou plusieurs modèles d'assistance intelligents en fonction des besoins d'assistance identifiés. Ces modèles d'assistance intelligents sont utilisés pour générer des flux de conversation d'assistance en se basant sur le besoin identifié, le contexte primaire identifié, les profils des utilisateurs associés aux flux de conversation et les contextes secondaires. En parallèle de la capture des flux de conversation, les flux de conversation d'assistance peuvent être envoyés en temps réel aux utilisateurs concernés à l'aide des modèles d'assistance intelligents.

US20240089375 décrit un système pour fournir une assistance virtuelle dans une interaction client-agent. Le système comprend un appareil agent configuré pour permettre des communications multidirectionnelles sur un réseau entre l'appareil agent, un appareil utilisateur distant et un serveur réseau. Le serveur réseau comprend un logiciel informatique qui met en œuvre une interface homme-machine avec un robot d'intelligence artificielle configuré en tant qu'agent d'assistance virtuelle. Un canal de conférence de communication sur le réseau est simultanément accessible par l'appareil agent, l'appareil utilisateur distant et l'agent d'assistance virtuelle sur le serveur réseau, permettant une interaction multipartite entre un agent en direct, un utilisateur distant et l'agent d'assistance virtuelle.

Cependant, ces systèmes sont relativement complexes et coûteux à mettre en œuvre. En outre, ces systèmes ne sont pas spécifiquement adaptés au contexte d'une conversation dans la cabine d'un véhicule.

EP3608783 décrit une méthode et un système pour l'interaction entre un assistant automobile, un appareil client et un ordinateur de bord de véhicule. La méthode implique l'identification d'une demande d'action à partir de l'appareil client, la détermination de l'action demandée, des données de contenu et de l'identifiant associé à l'application sur l'appareil client. En réponse à la demande d'action, l'assistant automobile fournit une sortie à l'utilisateur via une interface d'assistant automatique. Si l'utilisateur fournit une entrée en réponse à la sortie, une deuxième demande d'action d'intention est envoyée à l'appareil client pour effectuer une deuxième action en utilisant d'autres données de contenu et l'identifiant. Ce système est conçu pour équiper un véhicule, mais est bien différent de l'invention décrite ci-après.

### Exposé de l'invention

Le but de la présente invention est de proposer un assistant conversationnel amélioré, conçu pour équiper un véhicule.

A cet effet, l'invention a pour objet une méthode d'optimisation d'un assistant conversationnel dans un environnement multi locuteurs d'une cabine de véhicule, la méthode comprenant les étapes suivantes :
- une étape de capture de données de conversation, incluant la capture simultanée d'images et de sons relatifs à différents locuteurs présents dans la cabine ;
- une étape d'analyse en temps réel des données de conversation capturées, incluant une sous-étape d'identification du locuteur actuel et une sous-étape d'identification d'un état de conversation actuel ; et
- une étape d'intervention de l'assistant conversationnel, incluant l'émission d'un message vocal sur un sujet déterminé à un instant déterminé, en tenant compte des données de conversation, des locuteurs et des états de conversation identifiés.

Ainsi, l'invention permet d'améliorer l'expérience utilisateur du véhicule, en rendant plus naturels les échanges entre l'assistant conversationnel et les occupants du véhicule. L'invention présente plusieurs avantages par rapport à l'art antérieur. Tout d'abord, l'analyse de la conversation en temps réel permet à l'assistant d'intervenir instantanément et judicieusement, ce qui n'est pas le cas des assistants courants. Ensuite, l'analyse peut être effectuée simultanément sur plusieurs sources d'informations, telles que les signaux visuels et vocaux, ce qui permet une compréhension plus fine de la conversation. Enfin, l'assistant peut être programmé pour respecter les règles de la conversation de manière systématique, ce qui garantit une intervention harmonieuse et respectueuse des passagers.

Selon d'autres caractéristiques avantageuses de l'invention, prises isolément ou en combinaison :
L'étape d'analyse des données de conversation comprend une sous-étape de détection d'un sujet de conversation actuel ; et en ce que dans l'étape d'intervention, le message vocal de l'assistant conversationnel tient compte du sujet de conversation détecté.

Dans l'étape d'intervention, lorsque le sujet du message vocal est classé comme prioritaire, le message vocal est déclenché en faisant abstraction de l'état de conversation actuel identifié, et lorsque le sujet du message vocal est classé comme non prioritaire, le message vocal est déclenché seulement si l'état de conversation actuel identifié correspond à une pause ou une clôture de la conversation.

La sous-étape d'identification du locuteur actuel prend en compte des données relatives :
- A des rythmes de parole de chaque locuteur ; et/ou
- A une organisation de la parole de chaque locuteur ; et/ou
- A des dynamiques de transitions entre locuteurs.

La sous-étape d'identification de l'état de conversation actuel prend en compte des données relatives :
- A des marqueurs de continuité ;
- A des marqueurs de rupture ;
- A une reprise après une pause ;
- A une organisation des tours de parole entre locuteurs ;
- A des passages mutuels de parole entre locuteurs ;
- A des séquences relatives à un même sujet de conversation ; et/ou
- A une réparation lors de certains échanges.

La sous-étape d'identification du locuteur actuel et la sous-étape d'identification d'un état de conversation actuel sont mises en œuvre par au moins un algorithme d'apprentissage supervisé, à partir des données de conversation capturées.

La sous-étape d'identification du locuteur actuel et la sous-étape d'identification d'un état de conversation actuel sont mises en œuvre par deux algorithmes distincts d'apprentissage supervisé, incluant un algorithme utilisant les images capturées et un algorithme utilisant les sons capturés.

Le déclenchement de l'étape d'intervention est effectué en tenant compte d'un taux de confiance de chaque algorithme dans sa prédiction et/ou de conditions relatives à un environnement extérieur du véhicule.

L'invention a également pour objet un système d'optimisation d'un assistant conversationnel dans l'environnement multi locuteurs d'une cabine de véhicule, le système comprenant :
- des dispositifs de capture des données de conversation, installés dans la cabine et configurés pour la capture simultanée des images et des sons des différents locuteurs présents dans la cabine ;
- une unité d'analyse en temps réel des données de conversation capturées par les dispositifs de capture, configurée pour effectuer un suivi des locuteurs et un suivi des états de conversation ; et
- l'assistant conversationnel, connecté à l'unité d'analyse et configuré pour effectuer des interventions en temps réel, chaque intervention incluant l'émission d'un message vocal sur un sujet déterminé à un instant déterminé, en tenant compte des données de conversation, des locuteurs et des états de conversation identifiés.

L'invention concerne également un véhicule, équipé d'un système tel que mentionné ci-dessus.

### Description des figures

L'invention sera mieux comprise à la lecture de la description qui va suivre, donnée uniquement à titre d'exemple non limitatif et faite en référence aux dessins annexés sur lesquels :
[Fig. 1] est une représentation schématique en vue de dessus d'un véhicule conforme à l'invention, équipé d'un assistant conversationnel optimisé.
[Fig. 2] est un logigramme illustrant la méthode selon l'invention et ses étapes constitutives.
[Fig. 3] est un graphe illustrant un exemple de suivi de la conversation et des transitions entre les locuteurs présents dans la cabine.
[Fig. 4] est un tableau illustrant la dynamique des transitions de la figure 3.
[Fig. 5] est un graphe illustrant un exemple de suivi des états de la conversation entre les locuteurs présents dans la cabine.
[Fig. 6] est un tableau illustrant la dynamique des états de la figure 5.

### Description détaillée de l'invention

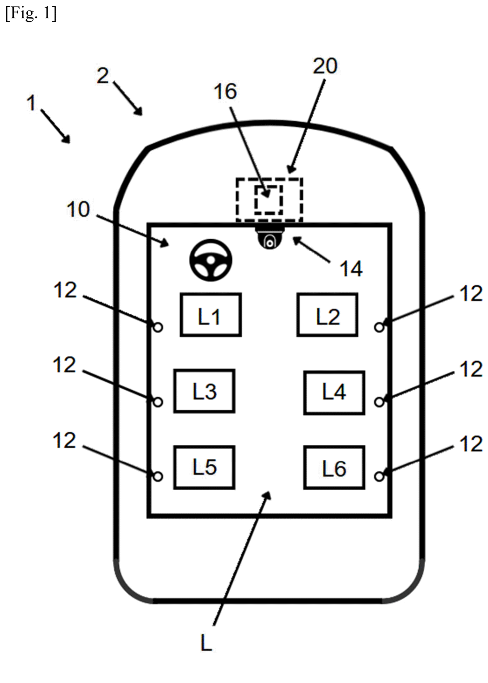

Sur la figure 1 est représenté un véhicule (1) conforme à l'invention, comprenant une cabine (10) et équipé d'un assistant vocal conversationnel (20), capable de communiquer avec au moins un locuteur (L) situé dans la cabine (10). La cabine (10) est munie de plusieurs sièges, qui sont occupés par six passagers, identifiés comme six locuteurs (L1-L6) différents.

En pratique, l'analyse conversationnelle démontre qu'une conversation entre plusieurs personnes dans un véhicule (1) est très structurée, réglée et codifiée de façon à optimiser les échanges entre les locuteurs (L). Voici les étapes principales assez génériques qui régissent une conversation :

Démarrage de la conversation : La conversation peut débuter de manière spontanée, en lien avec le contexte de la situation (par exemple, en commentant le paysage ou la circulation). Le sujet de conversation peut également être initié par l'un des passagers, qui peut poser une question ou faire une remarque sur un sujet d'intérêt commun.

Organisation des tours de parole : Lors d'une conversation à plusieurs dans un véhicule (1), l'organisation des tours de parole peut être influencée par la disposition des locuteurs (L), par exemple deux à l'avant et quatre à l'arrière. Le passager (L2) assis à l'avant peut avoir tendance à prendre la parole plus souvent, en raison de sa position plus proche du conducteur (L1). Cependant, les passagers (L3-L6) à l'arrière (notamment des enfants) peuvent également participer activement à la conversation en utilisant des signaux verbaux et non verbaux pour indiquer leur intention de prendre la parole.

Passages mutuels de la parole : Idéalement, les passages de la parole entre les locuteurs (L) participant à la conversation doivent se faire sans chevauchement en fin de tours, c'est-à-dire que chaque participant doit attendre que le précédent ait terminé sa phrase avant de prendre la parole. Cette coordination est essentielle pour éviter les interruptions et les confusions dans la conversation, en particulier dans un environnement bruyant comme un véhicule (1) en mouvement.

Séquentialité et interaction : La conversation se déroule en séquences, c'est-à-dire en une série d'échanges verbaux liés les uns aux autres par leur contenu et leur fonction. Les locuteurs (L) doivent être attentifs aux contributions des autres et réagir en conséquence, en utilisant des marqueurs de continuité (comme "oui", "d'accord", "je vois") ou des marqueurs de rupture (comme "non", "je ne suis pas d'accord", "je ne comprends pas"). A bord d'un véhicule (1), les participants doivent également tenir compte du contexte de la situation, en adaptant leur discours aux contraintes de l'environnement (par exemple, en parlant plus fort pour couvrir le bruit du moteur).

Réparation : Les erreurs, les malentendus et les changements de demande sont inévitables dans une conversation. Les locuteurs (L) participants doivent donc être capables de réparer les problèmes de communication en utilisant des procédures de réparation appropriées. Les procédures de réparation peuvent être initiées par le locuteur (par exemple, en répétant ou en reformulant sa phrase) ou par l'auditeur (par exemple, en demandant une clarification). Dans la cabine (10) d'un véhicule (1), les procédures de réparation peuvent être rendues plus difficiles en raison du bruit ambiant et des distractions visuelles.

Pauses (PA) : La conversation peut être interrompue par des pauses (PA), qui peuvent être brèves (par exemple, pour permettre à un participant de réfléchir) ou plus longues (par exemple, pour marquer une transition dans la conversation). A bord d'un véhicule (1), les pauses (PA) peuvent être influencées par les événements extérieurs (par exemple, un feu rouge ou un ralentissement de la circulation).

Reprises : Les reprises de la conversation peuvent être initiées par un participant qui reprend la parole après une pause (PA), ou par un autre participant qui relance la conversation.

Clôture (CL) de la conversation : La conversation se termine généralement par des échanges de politesse et des formules de clôture (comme "d'accord ", "Ok ", "Bien"). A bord d'un véhicule (1), la clôture (CL) de la conversation peut être aussi influencée par l'arrivée à destination ou par d'autres événements extérieurs (par exemple, un appel téléphonique entrant).

Ainsi, une conversation entre personnes qui se connaissent et qui sont dans un véhicule (1) se structure autour de l'organisation des tours de parole, des passages mutuels de la parole, de la séquentialité et de l'interaction, de la réparation, des pauses et des reprises, et de la clôture de la conversation.

L'assistant vocal conversationnel (20) se devra de respecter ces éléments essentiels pour s'immiscer au mieux dans la conversation afin d'assurer une communication efficace et harmonieuse avec les participants dans la cabine (10) du véhicule (1).

Sur la figure 1, le véhicule (1) est équipe d'un système (2) d'optimisation de l'assistant conversationnel (20). Le système (2) comprend des dispositifs de capture (12 ; 14), une unité d'analyse (16), ainsi que l'assistant conversationnel (20) lui-même, configuré de manière particulière.

Les dispositifs de capture (12 ; 14) sont conçus pour capturer les données de conversation (DC) dans la cabine (10). Les dispositifs de capture (12 ; 14) sont installés dans la cabine (10) et configurés pour la capture simultanée des images et des sons des différents locuteurs (L) présents dans la cabine (10). Plus précisément, les dispositifs de capture (12 ; 14) comprennent des microphones (12) installés dans la cabine (10) à proximité des différents sièges, afin de pouvoir plus facilement discriminer la prise de parole de chacun des locuteurs (L), ainsi qu'une caméra (14) grand angle installée à l'avant de la cabine (10) et capable de capturer en image les visages des différents locuteurs (L).

Les dispositifs de capture (12 ; 14) assurent plusieurs objectifs :
- Identification des locuteurs : Les capteurs audio (12) et capteur caméra vidéo (14) permettent d'identifier les locuteurs (L) en cours de conversation, ce qui est essentiel pour suivre les tours de parole et déterminer qui parle à quel moment. De plus les biométries faciale et vocale fusionnées permettent l'identification fiable de chaque locuteur en cours.
- Détection des signaux visuels : Le capteur caméra vidéo (14) permet de détecter les signaux visuels émis par les locuteurs (L), tels que les expressions faciales, les gestes et les mouvements corporels. Ces signaux peuvent indiquer l'intention de prendre la parole, la compréhension ou l'incompréhension, l'accord ou le désaccord, etc.
- Détection des signaux vocaux : Les capteurs audio (12) permettent de détecter les signaux vocaux émis par les locuteurs (L), et de générer via post-traitement des données de plus haut niveau telles que le ton de la voix, l'intonation, le volume et le rythme. Ces signaux peuvent indiquer l'émotion, l'hésitation, la confiance, etc.
- Détection des fins de tours de parole : Les capteurs audio (12) permettent de détecter les fins de tours de parole, ce qui est essentiel pour éviter les chevauchements de parole et permettre une transition fluide entre les locuteurs (L).
- Détection des pauses (PA) : Les capteurs audio et vidéo (12 ; 14) permettent de détecter les pauses (PA) dans la conversation, ce qui peut indiquer une hésitation, une réflexion ou une transition vers un nouveau sujet.
- Détection des erreurs et des malentendus : Les capteurs audio et vidéo (12 ; 14) permettent de détecter les erreurs et les malentendus dans la conversation, ce qui est essentiel pour initier des procédures de réparation appropriées.
- Suivi de la séquence des échanges verbaux : Les capteurs audio et vidéo (12 ; 14) permettent de suivre la séquence des échanges verbaux, ce qui est essentiel pour comprendre la structure de la conversation et réagir de manière appropriée aux contributions des autres locuteurs (L).

Ainsi, les capteurs audio (12) et capteur caméra vidéo (14) sont par conséquents pertinents pour détecter les règles d'une conversation, puis analyser la conversation et permettre à l'assistant conversationnel (20) d'intervenir de manière appropriée.

L'unité d'analyse (16) est intégrée à l'assistant conversationnel (20), également appelé agent conversationnel. L'unité d'analyse (16) est conçue pour analyser en temps réel des données de conversation (DC) capturées par les dispositifs de capture (12 ; 14). L'unité d'analyse (16) est configurée pour effectuer un suivi des locuteurs (L1-L6) et un suivi des états de conversation (EC) impliquant les locuteurs (L1-L6). L'unité d'analyse (16) comprend de préférence un module d'intelligence artificielle (IA).

L'unité d'analyse (16) couplée aux dispositifs de capture (12 ; 14) et intégrée à l'assistant conversationnel (20) peut donc identifier les composantes de la conversation de la façon suivante :
- Démarrage de la conversation : L'agent conversationnel (20) peut écouter les échanges initiaux des locuteurs (L) pour identifier le sujet de conversation et déterminer si une intervention est nécessaire ou pertinente. Si l'agent (20) a des informations utiles à apporter, il peut attendre une pause appropriée dans la conversation pour intervenir de manière naturelle.
- Organisation des tours de parole : L'agent (20) peut utiliser la reconnaissance vocale et les biométries faciales et vocales pour identifier le locuteur actuel (LA) et déterminer qui est le suivant à prendre la parole.
- Passages mutuels de la parole : L'agent (20) peut utiliser la reconnaissance vocale pour détecter les fins de tours de parole et intervenir sans chevauchement avec les autres locuteurs (L).
- Séquentialité et interaction : L'agent (20) peut utiliser la reconnaissance vocale et les biométries faciales et vocales pour suivre la séquence des échanges verbaux et réagir de manière appropriée aux contributions des autres locuteurs (L). L'agent (20) peut également utiliser des marqueurs de continuité et de rupture pour indiquer sa compréhension et son engagement dans la conversation.
- Réparation : L'agent (20) peut utiliser la reconnaissance vocale et les biométries faciales et vocales pour détecter les erreurs et les malentendus dans la conversation et initier des procédures de réparation appropriées. L'agent (20) peut également fournir des clarifications et des reformulations pour aider les locuteurs (L) à résoudre les problèmes de communication.
- Pauses (PA) et reprises : L'agent (20) peut utiliser la reconnaissance vocale et les biométries faciales et vocales pour détecter les pauses (PA) dans la conversation et intervenir de manière appropriée pour relancer la conversation ou fournir des informations pertinentes.
- Clôture (CL) de la conversation : L'agent (20) peut utiliser la reconnaissance vocale et les biométries faciales et vocales pour détecter les signes de clôture de la conversation et intervenir de manière appropriée pour résumer les points clés de la conversation et remercier les locuteurs (L) pour leur participation.

L'assistant conversationnel (20) intègre l'unité d'analyse (16) et est connecté au système audio du véhicule (1). L'assistant conversationnel (20) est configuré pour effectuer des interventions en temps réel dans la conversation. Chaque intervention inclut l'émission d'un message vocal (MV) sur un sujet déterminé à un instant déterminé, en tenant compte des données de conversation (DC), des locuteurs (L1-L6) et des états de conversation (EC) identifiés.

Grâce aux technologies de capture vidéo et audio, de reconnaissance vocale et de biométrie faciale et vocale, l'agent (20) est capable d'analyser en temps réel la conversation en cours entre les passagers d'un véhicule (1). Ainsi, l'agent (20) peut intervenir de manière optimale dans la conversation, en agissant comme un locuteur (L) supplémentaire.

Pour cela, l'agent (20) respecte les règles de la conversation qu'il aura apprises, telles que l'organisation des tours de parole, les passages mutuels de la parole, la séquentialité et l'interaction, la réparation en cas d'erreur ou de changement de demande, ainsi que les pauses et les reprises de la conversation. L'agent (20) est aussi capable de s'adapter aux spécificités de la conversation en cours, telles que le contexte, le sujet abordé, le ton employé, etc. L'agent (20) peut identifier les locuteurs en cours de conversation, détecter les fins de tours de parole, les pauses, les erreurs et les malentendus, et suivre la séquence des échanges verbaux. Ces informations sont essentielles pour permettre à l'agent (20) d'intervenir de manière naturelle et harmonieuse dans la conversation.

Avantageusement, l'unité d'analyse (16) intégrée à l'agent (20) peut comprendre une IA de type générative LLM (Language Learning Model), capable de comprendre la conversation en cours et de s'y insérer de manière encore plus transparente. L'IA générative LLM est un modèle d'apprentissage automatique spécialisé dans la compréhension et la génération de langage naturel. Grâce à des algorithmes d'apprentissage profond, l'IA générative LLM est capable d'analyser de larges corpus de textes et de conversations, et d'en extraire des modèles linguistiques complexes. Cette capacité lui permet de comprendre le contexte d'une conversation, d'identifier les sujets abordés, les intentions des locuteurs (L), les émotions exprimées, etc.

Grâce à cette compréhension approfondie de la conversation, l'IA générative LLM peut intervenir de manière plus pertinente et plus naturelle. Elle peut proposer des suggestions adaptées au contexte de la conversation, répondre aux questions des locuteurs (L) de manière plus précise, et même anticiper les besoins des locuteurs (L) en fonction de la conversation en cours.

Par exemple, si les locuteurs (L) discutent de leur destination et des lieux à visiter, l'IA générative LLM peut faire proposer par l'assistant conversationnel (20) des suggestions de restaurants ou de sites touristiques à proximité. Idem si les locuteurs (L) discutent de musique, l'IA générative LLM peut proposer judicieusement des listes de lecture adaptées à leurs goûts musicaux.

L'intégration d'une IA générative LLM capable de comprendre la conversation en cours dans un véhicule (1) permet par conséquent une intervention encore plus transparente et naturelle de l'agent (20) dans la conversation. Cette solution offre des avantages supplémentaires, tels qu'une compréhension plus approfondie de la conversation, une intervention plus pertinente et plus adaptée au contexte, et une anticipation des besoins des locuteurs (L) en fonction de la conversation en cours.

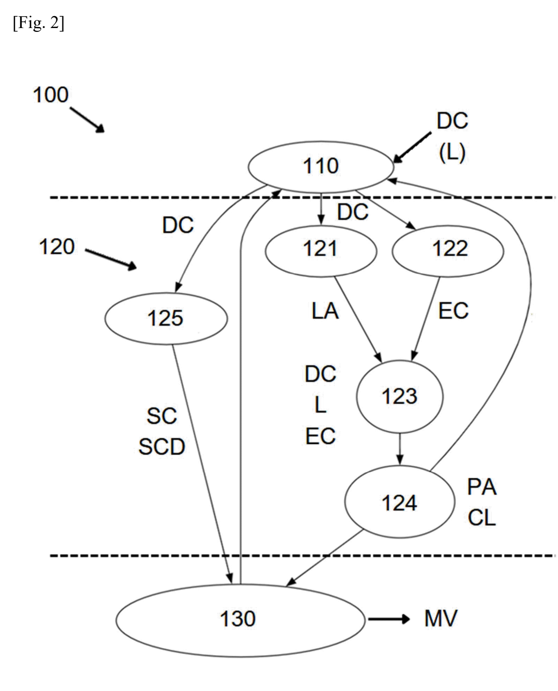

Sur la figure 2 est représentée la méthode (100) conforme à l'invention, comprenant une étape de capture (110), une étape d'analyse (120) avec plusieurs sous-étapes (121-125), et une étape d'intervention (130).

L'étape de capture (110) des données de conversation (DC) inclut la capture simultanée d'images et de sons relatifs aux différents locuteurs (L1-L6) présents dans la cabine (10). L'étape de capture (110) est effectuée grâce aux dispositifs de capture (12 ; 14). L'étape de capture (110) et l'étape d'analyse (120) sont simultanées.

L'étape d'analyse (120) consiste à analyser en temps réel des données de conversation (DC) capturées. L'étape d'analyse (120) est effectuée grâce à l'unité d'analyse (16).

L'étape d'analyse (120) inclut une sous-étape (121) d'identification du locuteur actuel (LA) parmi les possibles locuteurs (L1-L6) ; et une sous-étape (122) d'identification d'un état de conversation (EC) actuel.

Dans la sous-étape (121), le suivi des locuteurs (L1-L6) consiste à détecter le locuteur actif (LA) à tout moment de la conversation, ainsi que les rythmes de parole de chaque locuteur (L1-L6) ; l'organisation de la parole de chaque locuteur (L1-L6) ; et/ou les dynamiques de transitions entre locuteurs (L1-L6).

Dans l'étape d'analyse (120), les états de conversation (EC) identifiés peuvent comprendre :
- un démarrage de conversation ;
- une pause (PA) dans la conversation en cours ;
- une clôture (CL) de conversation ;
- les marqueurs de continuité dans la conversation (comme "oui", "d'accord", "je vois") ;
- les marqueurs de rupture dans la conversation (comme "non", "je ne suis pas d'accord", "je ne comprends pas") ;
- une reprise après une pause (PA) ;
- l'organisation des tours de parole entre locuteurs (L1-L6) ;
- les passages mutuels de parole entre locuteurs (L1-L6) ;
- les séquences relatives à un même sujet de conversation (SC) ; et/ou
- une réparation lors de certains échanges.

Les deux sous-étapes (121, 122) peuvent être mises en œuvre par un algorithme d'apprentissage supervisé (apprentissage sur une base de données annotée) à partir des informations audio et visuelles collectées lors de l'étape de capture (110). Il est possible de prévoir un unique algorithme, ou bien un algorithme par type de données collectées, i.e. un algorithme pour les images, par exemple un réseau de neurones de type CNN, et un algorithme pour les audios, par exemple un réseau de neurones de type LSTM.

La décision finale de déclenchement de l'étape d'intervention (130) serait prise en prenant en compte la prédiction de chaque algorithme, et en particulier le taux de confiance de chaque algorithme sur sa prédiction. Des données extérieures pourraient également être prises en compte dans la prise de décision, par exemple si des données cartographiques indiquent que le véhicule (1) se situe dans un tunnel, on donne plus de poids à la prédiction via les images (l'audio peut être mauvais), et/ou si on détecte un grand ensoleillement, on donne plus de poids à la prédiction via l'audio (la caméra peut être saturée).

L'étape d'analyse (120) inclut également une sous-étape (123) de filtrage et traitement des locuteurs (L) et des états de conversation (EC). L'agent (20) sait traiter de manière cohérente et simultanée le locuteur actuel (LA) et l'état de la conversation (EC) pour déterminer si une intervention est appropriée. L'agent (20) croise l'information provenant de l'analyse des locuteurs (L) dans la sous-étape (121) avec les informations sur l'analyse des états de la conversation (EC) dans la sous-étape (124).

L'étape d'analyse (120) inclut également une sous-étape (124) de détection d'une pause (PA) dans la conversation ou d'une clôture (CL) de la conversation en cours. Cette sous-étape (124) est importante pour le déclenchement de l'étape d'intervention (130).

En parallèle des sous-étapes (121-124), l'étape d'analyse (120) inclut également une sous-étape (125) de détection d'un sujet de conversation (SC) actuel, permettant la détection des différents sujets de conversation (SC) au cours d'une même conversation, notamment la détection d'un sujet de conversation dominant (SDC) dans la conversation ou sur la fin de la conversation. L'IA type LLM décrite plus haut, qui peut être générique, ou entraînée pour un contexte véhicule, intervient dans cette sous-étape (125) de compréhension du sujet de la conversation (SC).

L'étape d'intervention (130) inclut l'émission d'un message vocal (MV) de l'assistant conversationnel (20), sur un sujet déterminé et à un instant déterminé, en tenant compte des données de conversation (DC), des locuteurs (L1-L6) et des états de conversation (EC) identifiés dans l'étape d'analyse (120). L'étape d'intervention (130) est effectuée par l'assistant conversationnel (20).

L'instant déterminé dépend notamment des sous-étapes (123, 124). Le sujet déterminé dépend notamment de la sous-étape (125) et de la situation du véhicule (1).

De préférence, le message vocal (MV) de l'assistant conversationnel (20) tient compte des sujets de conversation (SC) identifiés dans la sous-étape (125), notamment du sujet de conversation dominant (SCD) identifié.

Lorsque le sujet du message vocal (MV) est classé comme prioritaire, par exemple en lien avec la sécurité du véhicule (1) et de ses passagers, le message vocal (MV) peut être déclenché en faisant abstraction de l'état de conversation (EC) actuel identifié.

L'agent conversationnel (20), en surveillant en temps réel la conversation, sait aussi si son message (MV) est urgent et par conséquent nécessite une intervention immédiate. En effet, lorsque le message (MV) à transmettre est crucial, par exemple en cas de sécurité ou de problème technique du véhicule (1), l'agent (20) se permet d'interrompre la conversation pour délivrer l'information nécessaire. L'agent (20) évalue la priorité de son message en fonction de la gravité de la situation, distinguant les urgences des informations moins pressantes. L'interruption peut se faire de manière fluide et respectueuse, afin de ne pas perturber complètement l'échange, tout en assurant que le conducteur prenne conscience immédiatement de la situation. Après avoir transmis le message (MV) d'urgence de manière claire et concise, l'agent (20) revient ensuite à son état de surveillance, prête à reprendre l'écoute ou permettre à la conversation de reprendre. Ainsi, l'agent (20) garantit la sécurité tout en minimisant les interruptions dans l'interaction.

Lorsque le sujet du message vocal (MV) est classé comme non prioritaire, par exemple lors d'une conversation familiale ou amicale sans lien avec la sécurité du véhicule (1), le message vocal (MV) est déclenché seulement si l'état de conversation (EC) actuel identifié comprennent une pause (PA) ou une clôture (CL) de la conversation, tel que défini dans la sous-étape (124).

La méthode (100) suit un cycle de capture et d'analyse des données de conversation (DC) audio et visuelles, relatives aux locuteurs (L) et états de conversation (EC). En fonction du sujet (SC) et de l'état (EC) de la conversation, l'étape d'intervention (130) est déclenchée au moment opportun. Après chaque étape d'intervention (130), la méthode (100) revient à l'étape d'analyse (120). Ainsi, la méthode (100) permet à l'assistant conversationnel (20) de participer activement à la conversation tout en s'adaptant aux besoins contextuels.

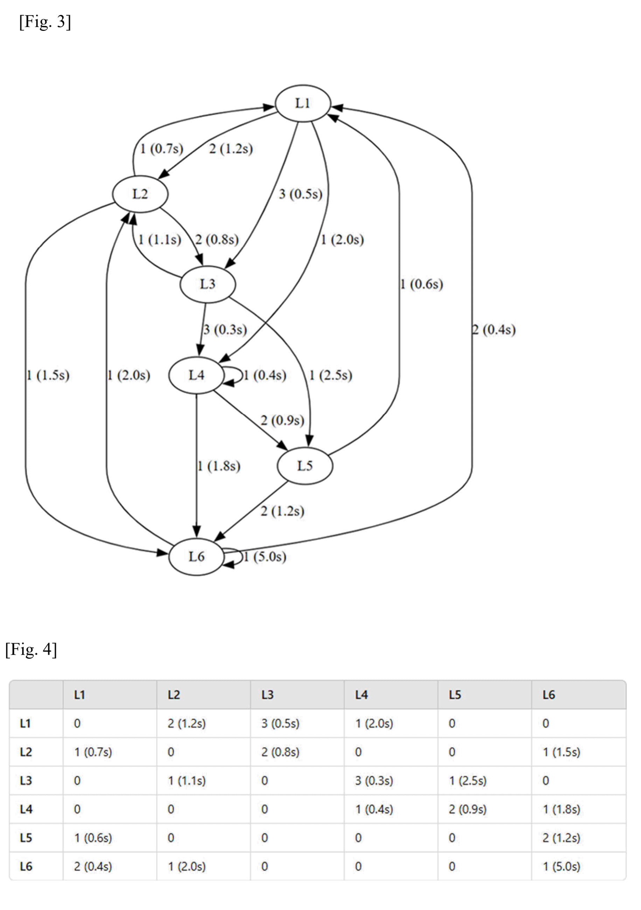

Sur les figures 3 et 4 est représentée l'étape d'analyse (120), lorsque l'agent conversationnel (20) observe les transitions entre locuteurs (L) de la conversation, au travers d'un graphe sur la figure 3 et d'une matrice de transition sur la figure 4.

Dans cet exemple, la conversation est menée entre six locuteurs (L1-L6). Grâce aux capteurs (12 ; 14) placés dans la cabine (10), l'agent (20) peut suivre en temps réel le déroulement de la conversation.

L'agent (20) commence par identifier chaque locuteur (L) et repérer les moments où ce locuteur (L) prend la parole. L'agent (20) enregistre également les moments où la parole est transférée d'un locuteur (L) à un autre : les transitions.

Par exemple:
- Si L1 termine une phrase et L2 prend la parole immédiatement après, une transition de L1 à L2 est enregistrée.
- Si L1 termine et que L3 intervient après une courte pause (PA), une transition de L1 à L3 est notée.

En complément, l'agent (20) mesure deux paramètres essentiels pour chaque transition :
- Le nombre de fois où une transition spécifique se produit : cela permet de mesurer les nombres d'échanges entre les locuteurs (L), par exemple si L1 s'adresse souvent à L3.
- La durée moyenne entre la prise de parole de deux locuteurs (L) : cela donne une indication du rythme de la conversation et permet de différencier les échanges fluides (temps courts) des échanges plus réfléchis ou interrompus (temps longs).

Dans un second temps, après avoir observé et mesuré ces interactions sur une période donnée, l'agent (20) compile toutes les transitions détectées dans une matrice de transition, représenté sous forme de tableau sur la figure 4. Chaque cellule de cette matrice représente les interactions entre deux locuteurs spécifiques :
- Les lignes indiquent le locuteur initial (celui qui cède la parole).
- Les colonnes indiquent le locuteur suivant (celui qui prend la parole).
- Le contenu de chaque cellule est composé de deux informations :
- Le nombre total de transitions entre ces deux locuteurs.
- La durée moyenne de ces transitions (exprimée en secondes).

Par exemple, la cellule correspondant à L1 en ligne et L3 en colonne peut indiquer qu'il y a eu 3 transitions de L1 à L3 avec une durée moyenne de 0,5 seconde.

L'analyse de la matrice de transition permet différentes interprétations :
- L1 transfère fréquemment la parole à L3 (3 fois), et ces passages se font rapidement (0,5 seconde en moyenne).
- En revanche, les échanges entre L2 et L6 sont moins fréquents (1 fois), et la transition prend plus de temps (1,5 seconde en moyenne).
- Dans d'autres cas, comme entre L4 et L5, on observe des échanges modérés (2 transitions) avec un temps d'attente court (0,9 seconde).

Cette matrice permet non seulement de capturer la dynamique des conversations, mais aussi de révéler les relations et les comportements implicites dans les échanges.

Également, le graphe du suivi de la conversation montré à la figure 3 permet différentes interprétations. Par exemple, on peut noter des échanges d'un locuteur (L) sur lui-même :
- L4 -> L4 de 0.4s qui peut refléter la situation d'une réparation
- L6 -> L6 de 5.0 s qui refléter la fin de la conversation

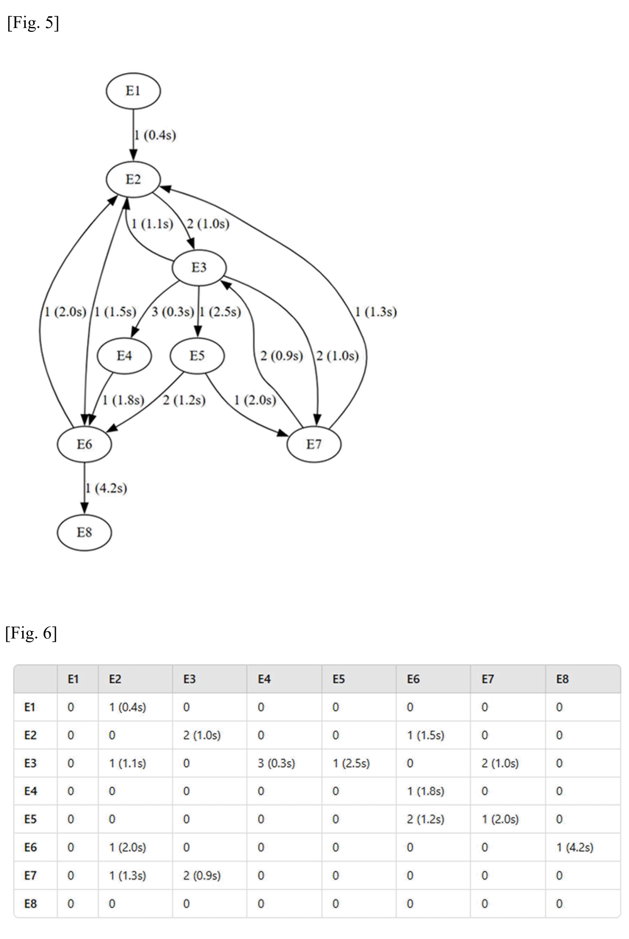

Sur les figures 5 et 6 est représentée l'étape d'analyse (120), lorsque l'agent (20) observe des transitions des états de conversation (EC : E1-E8) prédéfinis, sous forme d'un graphe sur la figure 5 et d'une matrice de transition sur la figure 6.

Dans cet exemple, les états (E1-E8) prédéfinis sont :
- Etat 1 (E1) : Démarrage de la conversation
- Etat 2 (E2) : Organisation des tours de parole
- Etat 3 (E3) : Passages mutuels de la parole
- Etat 4 (E4) : Séquentialité et interaction
- Etat 5 (E5) : Réparation
- Etat 6 (E6) : Pauses (PA) dans la conversation
- Etat 7 (E7) : Reprises
- Etat 8 (E8) : Clôture (CL) de la conversation

Le graphe et la matrice de transition permettent d'analyser les dynamiques dans la conversation. Par exemple, on peut noter ces transitions :
- E1 -> E2 : début de la conversation
- E6 -> E8 : fin de la conversation

Par ailleurs, le véhicule (1), le système (2) et la méthode (100) peuvent être conformés différemment des figures 1 à 6 sans sortir du cadre de l'invention, qui est défini par les revendications. En outre, les caractéristiques techniques des différents modes de réalisation et variantes mentionnés ci-dessus peuvent être, en totalité ou pour certaines d'entre elles, combinées entre elles. Ainsi, le véhicule (1), le système (2) et la méthode (100) peuvent être adaptés en termes de coût, de fonctionnalités et de performance.

## Revendications

1. Méthode (100) d'optimisation d'un assistant conversationnel (20) dans un environnement multi locuteurs d'une cabine (10) de véhicule (1), la méthode comprenant les étapes suivantes :
- une étape de capture (110) de données de conversation (DC), incluant la capture simultanée d'images et de sons relatifs à différents locuteurs (L1-L6) présents dans la cabine (10) ;
- une étape d'analyse (120) en temps réel des données de conversation (DC) capturées, incluant une sous-étape (121) d'identification du locuteur actuel (LA) et une sous-étape (122) d'identification d'un état de conversation (EC) actuel ; et
- une étape d'intervention (130) de l'assistant conversationnel (20), incluant l'émission d'un message vocal (MV) sur un sujet déterminé à un instant déterminé, en tenant compte des données de conversation (DC), des locuteurs (L1-L6) et des états de conversation (EC) identifiés ;
la méthode étant **caractérisée en ce que** la sous-étape (121) d'identification du locuteur actuel (LA) prend en compte des données relatives :
- à des rythmes de parole de chaque locuteur (L1-L6) ; et/ou
- à une organisation de la parole de chaque locuteur (L1-L6) ; et/ou
- à des dynamiques de transitions entre locuteurs (L1-L6).

2. Méthode (100) selon la revendication 1, **caractérisée en ce que** l'étape d'analyse (120) des données de conversation (DC) comprend une sous-étape (125) de détection d'un sujet de conversation (SC) actuel ; et **en ce que** dans l'étape d'intervention (130), le message vocal (MV) de l'assistant conversationnel (20) tient compte du sujet de conversation (SC) détecté.

3. Méthode (100) selon l'une quelconque des revendications précédentes, **caractérisée en ce que** dans l'étape d'intervention (130), lorsque le sujet du message vocal (MV) est classé comme prioritaire, le message vocal (MV) est déclenché en faisant abstraction de l'état de conversation (EC) actuel identifié, et lorsque le sujet du message vocal (MV) est classé comme non prioritaire, le message vocal (MV) est déclenché seulement si l'état de conversation (EC) actuel identifié correspond à une pause (PA) ou une clôture (CL) de la conversation.

4. Méthode (100) selon l'une quelconque des revendications précédentes, **caractérisée en ce que** la sous-étape (122) d'identification de l'état de conversation (EC) actuel prend en compte des données relatives :
- à des marqueurs de continuité ; et/ou
- à des marqueurs de rupture ; et/ou
- à une reprise après une pause (PA) ; et/ou
- à une organisation des tours de parole entre locuteurs (L1-L6) ; et/ou
- à des passages mutuels de parole entre locuteurs (L1-L6) ; et/ou
- à des séquences relatives à un même sujet de conversation (SC) ; et/ou
- à une réparation lors de certains échanges.

5. Méthode (100) selon l'une quelconque des revendications précédentes, **caractérisée en ce que** la sous-étape (121) d'identification du locuteur actuel (LA) et la sous-étape (122) d'identification d'un état de conversation (EC) actuel sont mises en œuvre par au moins un algorithme d'apprentissage supervisé, à partir des données de conversation (DC) capturées.

6. Méthode (100) selon la revendication 5, **caractérisée en ce que** la sous-étape (121) d'identification du locuteur actuel (LA) et la sous-étape (122) d'identification d'un état de conversation (EC) actuel sont mises en œuvre par deux algorithmes distincts d'apprentissage supervisé, incluant un algorithme utilisant les images capturées et un algorithme utilisant les sons capturés.

7. Méthode (100) selon la revendication 6, **caractérisée en ce que** le déclenchement de l'étape d'intervention (130) est effectué en tenant compte d'un taux de confiance de chaque algorithme dans sa prédiction et/ou de conditions relatives à un environnement extérieur du véhicule (1).

8. Système (2) d'optimisation d'un assistant conversationnel (20) dans l'environnement multi locuteurs d'une cabine (10) de véhicule (1), le système (2) comprenant :
- des dispositifs de capture (12 ; 14) des données de conversation (DC), installés dans la cabine (10) et configurés pour la capture simultanée des images et des sons des différents locuteurs (L1-L6) présents dans la cabine (10) ;
- une unité d'analyse (16) en temps réel des données de conversation (DC) capturées par les dispositifs de capture (12 ; 14), configurée pour effectuer un suivi des locuteurs (L1-L6) et un suivi des états de conversation (EC) ; et
- l'assistant conversationnel (20), connecté à l'unité d'analyse (16) et configuré pour effectuer des interventions en temps réel, chaque intervention incluant l'émission d'un message vocal (MV) sur un sujet déterminé à un instant déterminé, en tenant compte des données de conversation (DC), des locuteurs (L1-L6) et des états de conversation (EC) identifiés ;
**caractérisé en ce que** pour l'identification d'un locuteur actuel (LA), l'unité d'analyse (16) prend en compte des données relatives :
- à des rythmes de parole de chaque locuteur (L1-L6) ; et/ou
- à une organisation de la parole de chaque locuteur (L1-L6) ; et/ou
- à des dynamiques de transitions entre locuteurs (L1-L6).

9. Véhicule (1), équipé d'un système selon la revendication précédente.
